# EUROPÄISCHE PATENTSCHRIFT

(11) **EP 4 320 809 B1**
(45) Veröffentlichungstag und Bekanntmachung des Hinweises auf die Patenterteilung: **07.10.2026**
(21) Anmeldenummer: 23701674.6
(22) Anmeldetag: 20.01.2023
(51) Int. Cl.: H04L 9/08, H04L 9/14

(54) **VERFAHREN ZUM SICHEREN AUSHANDELN VON SYMMETRISCHEN SCHLÜSSELN ZWISCHEN ZWEI TEILNEHMERN EINER KOMMUNIKATION**
METHOD FOR SECURELY NEGOTIATING SYMMETRIC KEYS BETWEEN TWO PARTICIPANTS OF A COMMUNICATION
PROCÉDÉ DE NÉGOCIATION SÉCURISÉE DE CLÉS SYMÉTRIQUES ENTRE DEUX PARTICIPANTS D'UNE COMMUNICATION

(30) Priorität: 22.02.2022 DE 102022000638
(43) Veröffentlichungstag der Anmeldung: 14.02.2024
(73) Patentinhaber: Mercedes-Benz Group AG, 70372 Stuttgart (DE)
(72) Erfinder: FRIESEN, Viktor, 76139 Karlsruhe (DE); PAVLOVIC, Viktor, 70469 Stuttgart (DE); WEBER, Philipp, 74736 Hardheim (DE)
(74) Vertreter: Novagraaf Group
(86) Internationale Anmeldenummer: PCT/EP2023/051380
(87) Internationale Veröffentlichungsnummer: WO 2023/160916

(56) Entgegenhaltungen:
- DE-A1- 102016 106 602
- US-A1- 2020 280 436
- ISARA: "Quantum Safe VPN WI", vol. WG CYBER QSC Quantum-Safe Cryptography, 15 April 2018 (2018-04-15), pages 1 - 40, XP014315904, Retrieved from the Internet <URL:docbox.etsi.org/CYBER/QSC/05-CONTRIBUTIONS/2018/CYBERQSC(18)006004_Quantum_Safe_VPN_WI.docx> [retrieved on 20180415]

## Beschreibung

Die Erfindung betrifft ein Verfahren zum sicheren Aushandeln von symmetrischen Schlüsseln zwischen zwei Teilnehmern einer Kommunikation nach der im Oberbegriff von Anspruch 1 näher definierten Art.

Moderne Fahrzeuge zeichnen sich durch eine zunehmende Vernetzung aus. Die Fahrzeuge sind dabei nicht nur mit Systemen wie dem WorldWideWeb verbunden, sondern auch mit vom Fahrzeughersteller bzw. OEM betriebenen Systemen und Servern, beispielsweise herstellereigenen Applikationen und einem herstellereigenen Server, welcher häufig auch als Vehicle Backend bezeichnet wird. Diese werden vom Hersteller exklusiv für die eigene Fahrzeugflotte entwickelt, vermarktet und betrieben. All dies zusammen wird auch als Fahrzeug-Ökosystem bezeichnet.

In der Praxis ist es nun so, dass durch die vielfältigen Kommunikationsbeziehungen zwischen den einzelnen Systemkomponenten innerhalb eines solchen Fahrzeug-Ökosystems eine Vielzahl neuer Schnittstellen und Anwendungen entsteht, die allesamt durch geeignete kryptografische Verfahren, wie beispielsweise Mechanismen, Protokolle usw., abgesichert werden müssen. Die Absicherung dient einerseits dazu, die Privatsphäre des Fahrzeugnutzers zu wahren und andererseits dazu, keinen externen Eingriff in den Datenverkehr zu ermöglichen, welcher insbesondere bei der Übertragung von Daten, welche die Fahrzeugsteuerung betreffen, von Hackern genutzt werden könnte, um die Fahrzeuge anzugreifen und wichtige Funktionen zu manipulieren.

Gängige Praxis ist dabei der Einsatz von asymmetrischen Schlüsseln bzw. auf asymmetrischer Kryptografie basierenden Verfahren. Diese werden typischerweise in Form des sogenannten TLS (Transport Layer Security), manchmal auch des IPSec (Internet Protocol Security) eingesetzt, die ihrerseits herkömmliche asymmetrische Verfahren, wie z.B. das auf Primzahlenzerlegung basierende RSA oder ECC (Elliptic Curve Cryptography) nutzen.

Die typischerweise eingesetzten asymmetrischen kryptografischen Verfahren, wie beispielsweise ECC oder RSA, haben dabei den Vorteil, dass sie nach heutigem Stand eine relativ sichere Absicherung bei minimiertem Aufwand bieten. All diese Verfahren beruhen dabei jedoch auf kryptografischen Algorithmen, deren Sicherheit als nicht robust gegenüber Quantencomputern angesehen wird. Quantencomputer sind durch die Art, mit der sie rechnen, in der Lage, asymmetrische kryptografische Verfahren zu brechen und abgesicherte Daten innerhalb kürzester Zeit zu entschlüsseln. Die für die Kommunikation zwischen Fahrzeug und Backend heute typischerweise eingesetzten Verfahren zur kryptografischen Absicherung, also insbesondere zur Verschlüsselung und/oder Authentifizierung, sind dann nicht mehr sicher. Diese sogenannte Post-Quanten-Bedrohung war bisher eine eher theoretische Bedrohung, da Quantencomputer noch als reine Forschungsinstrumente galten und nur mit hohem Aufwand zu realisieren waren. In den vergangenen Jahren hat sich die Entwicklung von Quantencomputern jedoch deutlich beschleunigt. Eine sichere Prognose, dass ausreichend leistungsfähige Quantencomputer in den kommenden zehn Jahren am Markt nicht kommerziell verfügbar sein werden, lässt sich daher aus heutiger Sicht nicht mehr gewährleisten.

Fahrzeuge, welche heute auf den Markt kommen, werden in der Regel 10 bis 15 Jahre auf den Straßen unterwegs sein. Dies bedeutet, dass die Post-Quanten-Bedrohung, also die potenzielle Möglichkeit, durch zu einem späteren Zeitpunkt leicht oder insbesondere kommerziell verfügbare Quantencomputer die herkömmliche asymmetrische kryptografische Absicherung einfach zu brechen, bereits für heute auszuliefernde Fahrzeuge relevant ist. Die Kommunikation einer Kommunikationsvorrichtung des Fahrzeugs mit dem externen Server, welche heute meist mit auf RSA oder ECC basierenden kryptografischen Protokollen abgesichert ist, wäre also mit dem Eintreten dieser Post-Quanten-Bedrohung nicht mehr sicher, sodass eine sichere Kommunikation aus heutiger Sicht nicht über die gesamte zu erwartende Betriebsdauer der Fahrzeuge gewährleistet werden kann. Besonders schwerwiegend ist diese Bedrohung für Systeme, die nicht ohne weiteres aktualisiert bzw. upgedatet werden können. Beispielsweise für die in Fahrzeugen verbauten elektronischen Steuergeräte (ECU: Electronic Control Unit). Einfacher ist dies bei Servern, Smartphones oder dergleichen, welche auch bezüglich ihrer Hardware in der Regel sehr viel schneller erweitert werden können oder eine kürzere angenommene Lebensdauer aufweisen als Fahrzeuge.

Um der Post-Quanten-Bedrohung gerecht zu werden, wird allgemein seit einigen Jahren an asymmetrischen Algorithmen geforscht, die resistent gegen die Post-Quanten-Bedrohung sind. Es handelt sich dabei um die gängigerweise als Post-Quantum-Cryptography oder PQC bezeichneten Ansätze. Diese sind jedoch noch nicht sehr ausgereift, sodass sie sich heute noch nicht dazu eignen, die asymmetrischen herkömmlichen Verfahren zu ersetzen. Damit können heutige Fahrzeuge noch nicht mit post-quanten-fähigen kryptografischen Absicherungsverfahren konzipiert werden, da derartige Techniken noch nicht so weit ausgereift sind, dass eine abschließende Beurteilung der zu erwartenden Sicherheit möglich ist. Außerdem gibt es bisher keine Standardisierung und die Ansätze haben einen hohen Ressourcenbedarf. Ein vorauseilender Umstieg auf solche quantencomputerresistente kryptografische Verfahren ist also zum jetzigen Zeitpunkt weder sinnvoll noch einfach möglich. Gäbe es bereits ein als ausreichend sicher angesehenes standardisiertes PQC-Verfahren, so wäre auch ein solches nicht sinnvoll in den heutigen Kommunikationsvorrichtungen von Fahrzeugen zu implementieren, da ein höherer Kostenaufwand und ein hoher Ressourcenverbrauch der Wirtschaftlichkeit im aktuellen Fahrzeug-Ökosystem entgegensteht.

Ferner ist es so, dass symmetrische Verfahren wie beispielsweise AES (Advanced Encryption Standard) oder Hash-Verfahren wie beispielsweise SHA-512 (Secure Hash Algorithm) oder auch symmetrische Authentifizierungsverfahren wie beispielsweise HMAC (Hashed Message Authentication Code) nach heutigem Kenntnisstand von der Post-Quanten-Bedrohung nicht fundamental betroffen sind. Nach heutigem Kenntnisstand wäre die Sicherheit dieser Verfahren durch das Eintreten der Post-Quanten-Bedrohung zwar halbiert, sodass ein 128 bit-Schlüssel nach Verfügbarkeit von Quantencomputern noch eine 64-Bit-Sicherheit liefert. Eine solche Schwächung lässt sich jedoch relativ einfach durch erhöhte Schlüssellängen ausgleichen.

Verglichen mit asymmetrischen Verfahren ist es so, dass solche symmetrischen Verfahren das große Problem aufweisen, dass bei den symmetrischen kryptografischen Verfahren die Verteilung und das Aushandeln von Schlüsseln, insbesondere wegen deren potenziell sehr großen Anzahl, schwer zu handhaben sind. Dies betrifft insbesondere das Ausstatten der beteiligten Komponenten mit initialen symmetrischen Schlüsseln, das sogenannten Provisioning. Außerdem betrifft es das, insbesondere bedarfsgesteuerte, Aushandeln von, insbesondere gemeinsamen, symmetrischen Schlüsseln bzw. Sitzungsschlüsseln zwischen zwei oder mehr Kommunikationspartnern, die nicht im Besitz eines gemeinsamen symmetrischen Schlüssels sind, die sich also nicht bzw. noch nicht "kennen". Ferner muss für jede Komponente, mit welcher bereits eine Kommunikationsbeziehung bestand und bereits ein gemeinsamer symmetrischer Schlüssel vereinbart worden ist, dieser entsprechend vorgehalten werden. Aufgrund der typischerweise anfallenden sehr großen Anzahl von Kommunikationsbeziehungen ist das Verwalten der symmetrischen Schlüssel in einer Komponente extrem aufwändig

Aus diesem Grund ist es beispielsweise bei TLS zum Aushandeln von symmetrischen Schlüsseln zwischen den Kommunikationspartner vorgesehen, asymmetrische kryptografische Verfahren basierend auf Zertifikaten zu nutzen. Sind über solche Verfahren die symmetrischen Schlüssel ausgehandelt, dann wird auch bei TLS ausschließlich symmetrisch authentifiziert und verschlüsselt. Das Aushandeln über asymmetrische kryptografische Verfahren selbst ist, wie oben erläutert, nicht post-quanten-resistent.

Die DE 10 2020 003 739 A1 beschreibt ein Verfahren zur Verteilung und Aushandlung von Schlüsselmaterial innerhalb eines Fahrzeug-Ökosystems, bei dem eine zentrale Vertrauensinstanz bzw. Trust Authority etabliert wird, die beteiligten Teilnehmer initial mit individuellen Geheimnissen ausgestattet werden, mit deren Hilfe sie geschützt mit der Trust Authority kommunizieren können und bei Bedarf bei der Trust Authority geteilte Schlüssel für Teilnehmergruppen geschützt abholen können.

Die Nachteile dieses Verfahrens sind, dass alle ausgehandelten geteilten Geheimnisse von der Trust Authority erzeugt und anschließend zu den einzelnen Teilnehmern übertragen werden müssen und dass dafür jeder Teilnehmer mit der Trust Authority sowohl ein Authentifizierungsverfahren als auch ein Verschlüsselungsverfahren zur sicheren Übertragung dieser Geheimnisse implementieren muss. Es kann jedoch vorkommen, dass die Möglichkeiten eines mit geringen Ressourcen ausgestatteten Teilnehmers nicht ausreichen, sowohl ein sicheres Authentifizierungverfahren als auch ein sicheres Verschlüsselungsverfahren zu implementieren und sinnvoll zu nutzen. Dies gilt insbesondere für Steuergeräte in Fahrzeugen, die hinsichtlich der frei verfügbaren Rechenleistung und Speicherkapazität häufig eher geringe Ressourcen aufweisen.

Aus der US 2020/280436 A1 ist ein im wesentlichen gattungsgemäßes Verfahren bekannt, bei welchem zwischen zwei Teilnehmern einer Kommunikation symmetrische Schlüssel sicher ausgehandelt werden, wobei die Teilnehmer jeweils paarweise mit einem gemeinsamen Geheimnis ausgestattet sind.

Zum Stand der Technik kann außerdem auf die DE 10 2016 106 602 A1 verwiesen werden. Darin ist ein Verfahren zum Aufbau einer sicheren Kommunikation zwischen einem Initiator und einem Responder in einem Kommunikationsnetzwerk beschrieben. Dabei setzen beide Kommunikationspartner jeweils dieselben Geheimnisse als Schlüssel zur Ver- und Entschlüsselung von Datensätzen ein. Es wird jeweils eine separate Authentisierung/Authentifizierung in Bezug auf den ersten und den zweiten Kommunikationspartner vor Erzeugung eines für die sichere Kommunikation als gemeinsamen Schlüssel zu verwendenden Geheimnisses durchgeführt.

Zum weiteren Stand der Technik kann außerdem auf ISARA: "Quantum Safe VPN WI" , ETSI DRAHT; CYBERQSC(18) 006004, EUROPEAN TELECOMMUNICATIONS STANDARDS INSTITUTE (ETSI) , 650, ROUTE DES LUCIOLES ; r-06921 SOPHIA-ANTIPOLIS ; FRANCE Bd. WGC YBER QSC Qantum-Safe Cryptography 15. April 2018 (2018-04-15), Seiten 1-40, XP014315904, verwiesen werden.

Die Aufgabe der hier vorliegenden Erfindung besteht nun darin, ein verbessertes Verfahren zur Verteilung und zum Aushandeln von Schlüsselmaterial, insbesondere innerhalb eines Fahrzeug-Ökosystems, anzugeben.

Erfindungsgemäß wird diese Aufgabe durch das Verfahren mit den Merkmalen im Anspruch 1 gelöst. Weitere vorteilhafte Ausgestaltungen und Weiterbildungen dieses Verfahrens sind in den hiervon abhängigen Unteransprüchen angegeben.

Das erfindungsgemäße Verfahren setzt im Wesentlichen auf der oben genannten DE 10 2020 003 739 A1 auf und sieht es vor, dass alle Teilnehmerpaare TNᵢ, TNⱼ eines Kommunikationssystems, welche insbesondere Teil eines Fahrzeug-Ökosystems sein können, mit einem geteilten und damit gemeinsamen Geheimnis SEC_{TNi}^{TNj} ausreichender Länge und Entropie ausgestattet sind. Die gemeinsamen Geheimnisse SEC_{TNi}^{TNj} können dabei als initial geteilte Geheimnisse SEC_{TNi}^{TNj} verwendet werden, was jedoch bei sehr hoher Anzahl an Teilnehmern TNᵢ schnell sehr ressourcenintensiv wird. Sie können daher alternativ dazu auch zwischen zwei Teilnehmern TNᵢ, TNⱼ über einen weiteren Teilnehmer TNₖ den beide kennen und dem beide vertrauen bzw. mit dem beide schon mal kommuniziert hatten, bei Bedarf ausgetauscht werden. Gemäß einer sehr vorteilhaften Weiterbildung des Verfahrens gemäß der Erfindung kann dieser weitere Teilnehmer eine Vertrauensinstanz bzw. Trust Authority TA entsprechend der DE 10 2020 003 739 A1sein. Die Kommunikation könnte auch direkt zwischen nur einem Teilnehmer TNᵢ und der Trust Authority TA stattfinden, wobei dann ein initial geteiltes Geheimnis SEC_{TNi}^{TA} notwendig ist.

Erfindungsgemäß ist es bei dem Verfahren so, dass von diesem gemeinsamen Geheimnis SEC_{TNi}^{TNj} dann, im Gegensatz zum Stand der Technik in Form der DE 10 2020 003 739 A1, alle für die Absicherung der Kommunikation zwischen TNᵢ, und TNⱼ von diesen Teilnehmern TNᵢ TNⱼ genutzten Geheimnisse, bspw. symmetrische Schlüssel, bei Bedarf abgeleitet werden. Somit dient dieses geteilte Geheimnis SEC_{TNi}^{TNj} als die zentrale wenn nicht sogar die einzige "geheime Entropiequelle" für die Absicherung der Kommunikation zwischen den jeweiligen Teilnehmern TNᵢ, TNⱼ.

Dafür implementiert jeder Teilnehmer TNᵢ mindestens eine dem anderen Teilnehmer TNⱼ der Kommunikation oder der Trust Authority TA, falls diese der andere Teilnehmer TNₖ ist, bekannte sichere Schlüsselableitungsfunktion KDF. Diese kann insbesondere allein auf sicheren Einwegfunktionen, wie Hashfunktionen, basieren. Auch diese kann wie das geteilte Geheimnis initial implementiert sein oder kann über den weiteren Teilnehmer bereitgestellt oder geteilt werden.

Wird ein neuer Schlüssel für die Absicherung der Kommunikation zwischen den beiden Teilnehmern TNᵢ, und TNⱼ oder TNᵢ und der TA benötigt, sei es für einen neuen Zweck, also beispielsweise eine Erste Kommunikation, oder wegen einer Erneuerung eines abgelaufenen Schlüssels zu einem bereits bekannten Zweck, so wird dem einen der Teilnehmer TNᵢ von dem anderen der Teilnehmer TNⱼ oder der Trust Authority TA (oder auch umgekehrt) eine Ableitungsvorschrift DR (Derivation Rule) mitgeteilt. Diese Ableitungsvorschrift DR umfasst dabei zumindest die Information, welche der Schlüsselableitungsfunktionen genutzt werden soll, falls mehrere vorhanden sind und eine Eingangs- und/oder Ausgabe-Selektionsfunktion für die Definition eingehender und/oder ausgehender Bits. Sie übergibt mindestens einen Parameter der Schlüsselableitungsfunktion selbst.

In dem Verfahren gemäß der Erfindung werden mittels verschiedener Eingangs-Selektionsfunktion verschiedene Bereiche des gemeinsamen Geheimnisses genutzt werden. Damit können die Ableitungsvorschriften mit Hilfe der verschiedenen Eingangs-Selektionsfunktionen das geteilte Geheimnis optimal und über seine ganze Länge nutzen.

Auf dieser Basis lässt sich dann einfach und effizient ein symmetrischer Schlüssel zur kryptografischen Absicherung vom geteilten Geheimnis SEC_{TNi}^{TNj} ableiten. Dieser kann dann zur Authentifizierung und/oder Verschlüsselung genutzt werden. Bei einem initial geteilten Geheimnis kann diese Schlüsselaushandlung dabei mit nur einer einzigen zu übertragenden Nachricht erfolgen. Diese kann dabei gemäß einer später noch im Detail erläuterten sehr vorteilhaften Weiterbildung des erfindungsgemäßen Verfahrens die Inhalte der Nachricht - nicht jedoch die Ableitungsvorschrift DR - in verschlüsselter Form umfassen. Die gesamte Nachricht kann jedoch authentifiziert werden.

Die Vorteile des erfindungsgemäßen Verfahrens liegen dabei vor allem darin, dass:
- einfach und effizient ein symmetrischer und damit nach heutiger Kenntnis post-quanten resistenter Schlüssel ausgehandelt werden kann;
- das Verfahren bereits heute in Fahrzeug-Steuergeräten besonders vorteilhaft eingesetzt werden kann, da immer mehr Fahrzeug-Steuergeräte über ein sicheres Hardwaremodul (HSM) verfügen, in dem ein geteiltes Geheimnis sicher abgelegt werden kann, und das sichere initiale Einbringen von individuellen Geheimnissen in die Steuergeräte durch die Steuergerätehersteller heute bereits gängig ist.

Gemäß einer sehr günstigen Ausgestaltung des erfindungsgemäßen Verfahrens kann es dabei vorgesehen sein, dass die Schlüsselableitungsfunktion KDF als Parameter eine Schlüsselbasis KDF-Key, einen Salt KDF-Salt und eine Ausgabelänge KDF-Length nutzt, wobei die Schlüsselbasis KDF-Key das Geheimnis ist, welches für die Ableitung des Schlüssels direkt in die Schlüsselableitungsfunktion KDF einfließt, wobei der Salt KDF-Salt eine zufällige oder pseudozufällige Bitfolge vorgegebener Länge ist, und wobei die Ausgabelänge KDF-Length eine natürliche Zahl ist, welche die Länge des zu erstellenden symmetrischen Schlüssels angibt.

Über die Ableitungsvorschrift wird dem entsprechenden Teilnehmer TNᵢ (oder TNⱼ) mitgeteilt, welche Bits des gemeinsamen Geheimnisses SEC_{TNi}^{TNj} zur Bildung der Schlüsselbasis KDF-Key verwendet und in welcher Reihenfolge sie dafür angeordnet werden sollen. Die auf diese Weise ermittelte Schlüsselbasis KDF-Key wird anschließend für die Generierung des neuen Schlüssels mit KDF verwendet. Des Weiteren wird dem entsprechenden Teilnehmer TNᵢ (oder TNⱼ) mitgeteilt, welcher Salt für die Schlüsselgenerierung verwendet werden soll und welche Länge KDF-Length die Ausgabe der Schlüsselableitungsfunktion KDF haben soll.

Eine vorteilhafte Weiterbildung des erfindungsgemäßen Verfahrens sieht es vor, dass die Ableitungsvorschrift DR die zu verwendende Schlüsselableitungsfunktion KDF, den Salt KDF-Salt, die Ausgabelänge KDF-Length, und jeweils eine Eingangs- und/oder Ausgabe-Selektionsfunktion SeqPosln, SeqPosOut umfasst. Die Eingangs-Selektionsfunktion SeqPosln dient dazu, durch "Bitselektion" die Schlüsselbasis KDF-Key aus dem Geheimnis SEC zu bestimmen. Die Schlüsselbasis KDF-Key selbst ist dabei nicht Teil der Ableitungsvorschrift DR, da die Schlüsselbasis geheim ist und die Ableitungsvorschrift DR unverschlüsselt übertragen wird.

Damit kann dem einen der Teilnehmer TNᵢ nun von dem anderen der Teilnehmer TNⱼ oder der Trust Authority TA, falls diese der zweite Teilnehmer ist, eine Ableitungsvorschrift DR für den neuen Schlüssel unter Berücksichtigung der genannten Parameter und einer oder beider Selektionsfunktionen SeqPosln, SeqPosOut mitgeteilt werden. Diese Ableitungsvorschrift kann zumindest folgende Informationen enthalten:
- die zu verwendende Schlüsselableitungsfunktion KDF, die von den Parametern KDF-Key, KDF-Salt und KDF-Length abhängt;
- die Definition der Bitfolge KDF-Key in Abhängigkeit von SEC_{TNi}^{TNj} durch Angabe einer Eingangs-Selektionsfunktion SeqPosln, die definiert, welche Bits des Geheimnisses SEC_{TNi}^{TNj} in welcher Anordnung den KDF-Key bilden sollen;
- die Bitfolge KDF-Salt;
- die natürliche Zahl KDF-Length;
- die Definition der den neuen abgeleiteten Schlüssel DR(SEC_{TNi}^{TNj}) darstellenden Bitfolge in Abhängigkeit von der Ausgabe der Schlüsselableitungsfunktion KDF durch Angabe einer Ausgabe-Selektionsfunktion SeqPosOut, die definiert, welche Bits der Ausgabe der Schlüsselableitungsfunktion KDF in welcher Anordnung den neuen abgeleiteten Schlüssel DR(SEC_{TNi}^{TNj}) bilden sollen

Somit ist eine Ableitungsvorschrift DR bspw. durch ein Tupel folgender Form eindeutig beschrieben:
DR = (KDF, SeqPosln, KDF-Salt, KDF-Length, SeqPosOut).

Der durch eine derart definierte Ableitungsvorschrift DR und das geteilte Geheimnis SEC_{TNi}^{TNj} eindeutig festgelegte Schlüssel wird mit DR(SEC_{TNi}^{TNj}) bezeichnet und ist durch DR(SEC_{TNi}^{TNj}) := SeqPosOut(KDF(SeqPosIn(SEC_{TNi}^{TNj}), KDF-Salt, KDF-Length)) definiert.

Dabei ist die Eingangs-Selektionsfunktion SeqPosln eine Funktion, die aus Bitfolgen der Länge L(SEC_{TNi}^{TNj}) bestimmte Bits selektiert und diese selektierten Bits ggf. neu anordnet (L(bf) bezeichnet in diesem Dokument die Bitlänge einer Bitfolge bf). Analog ist die Ausgabe-Selektionsfunktion SeqPosOut eine Funktion, die aus Bitfolgen der Länge KDF-Length bestimmte Bits selektiert und diese selektierten Bits ggf. neu anordnet.

Eine Selektionsfunktion kann dabei die aus der Eingabe-Bitfolge selektierten Bits neu anordnen oder ihre ursprüngliche relative Ordnung zueinander beibehalten. Die erste neuordnende Variante einer Selektionsfunktion bietet mehr Flexibilität bei der Definition einer Selektionsfunktion, es können auf diese Weise mehr Selektionsfunktionen definiert werden, die Beschreibung einer die Bits neuordnenden Selektionsfunktion enthält jedoch dadurch mehr Informationen und benötigt mehr Platz in der Ableitungsvorschrift DR. Die zweite Variante, die auf eine Neuordnung der selektierten Bits verzichtet, ist weniger flexibel und mächtig, benötigt aber weniger Platz in der Ableitungsvorschrift DR. Da die Länge des geteilten Geheimnisses SEC_{TNi}^{TNj} fest ist, ist, unter der Annahme, dass jedes Bit aus SEC_{TNi}^{TNj} höchstens einmal durch die Eingangs-Selektionsfunktion SeqPosln selektiert wird, die Anzahl der KDF-Keys, die mit Hilfe der Eingangs-Selektionsfunktion SeqPosln aus dem Geheimnis SEC_{TNi}^{TNj} selektiert werden können, begrenzt, ggf. kann nicht jeder denkbare KDF-Key vorgegebener Länge mit Hilfe von SeqPosln aus SEC_{TNi}^{TNj} selektiert werden. Deswegen kann es insb. im Falle von SeqPosln sinnvoll sein, eine Neuordnung der selektierten Bits durch SeqPosln zu ermöglichen. Da SeqPosOut die Bits aus der Ausgabe der Schlüsselableitungsfunktion KDF selektiert und die Länge dieser Ausgabe durch den frei wählbaren Parameter KDF-Length bestimmt ist, kann für jede Schlüsselableitungsfunktion KDF und jede gewünschte Ausgabe chosenKey der DR-Parameter KDF-Length so gewählt werden, dass chosenKey durch eine ordnungsbewahrende Selektionsfunktionen SeqPosOut definiert werden kann, so dass chosenKey = DR(SEC_{TNi}^{TNj}) gilt.

Dabei kann eine Selektionsfunktion auf verschiedene Weise definiert werden. Im Folgenden werden mehrere denkbare Varianten beschrieben.

### Variante 1

Es wird vorgeschlagen, eine neuordnende Selektionsfunktion durch eine Folge von Bitpositionen (pos_0, ..., pos_(n-1)) zu beschreiben, wobei n die Länge der Ausgabe der Selektionsfunktion ist und die einzelnen Positionen pos_j kleiner als die Länge der Eingabe und untereinander paarweise verschieden sind, bspw. wird bei der Eingabe-Bitfolge 00001111 und n = 4 durch die Selektionsfunktion (0, 5, 2, 7) die Ausgabe-Bitfolge 0101 definiert bzw. kodiert.

### Variante 2.1

Es wird vorgeschlagen, eine ordnungsbewahrende Selektionsfunktion durch eine Folge von Abständen (dist_0, ..., dist_(n-1)) zu beschreiben, wobei n die Länge der Ausgabe der Selektionsfunktion ist, dist_0 ≥ 0 gilt, für die restlichen Abstände, also für 0 < j < n, dist_j > 0 gilt und die Summe aller Abstände kleiner als die Länge der Eingabe ist. Bspw. wird bei der Eingabe-Bitfolge 00001111 und n = 4 durch die Selektionsfunktion (0, 3, 2, 2) die Ausgabe-Bitfolge 0011 definiert bzw. kodiert. Man beachte, dass bei gleicher Eingabe-Bitfolge die Bitfolge 0101 durch eine ordnungsbewahrende Selektionsfunktion nicht definiert werden kann.

### Variante 2.2

Als erweiterung hiervon wird des Weiteren vorgeschlagen, eine ordnungsbewahrende Selektionsfunktion durch eine Folge von Abschnitten zu beschreiben, wobei ein Abschnitt entweder durch einen einzelnen Abstand dist_j oder durch ein Abstandspaar (dist_j, dist_k) beschrieben ist. Dabei repräsentiert ein einzelner Abstand einen aus einer Bitposition bestehenden Abschnitt während ein Abstandspaar (dist_j, dist_k) (dist_k + 1) zusammenhängende Bitpositionen repräsentiert, wobei dist_0 ≥ 0 gilt, für die restlichen Abstände, also für 0 < j < n, dist_j > 0 gilt und die Summe aller Abstände kleiner als die Länge der Eingabe ist, bspw. wird bei der Eingabe-Bitfolge 00001111 durch die Selektionsfunktion (0, (3, 2), 2) die Ausgabe-Bitfolge 00111 definiert bzw. kodiert.

### Variante 3

Des Weiteren wird vorgeschlagen, eine ordnungsbewahrende Selektionsfunktion durch eine Bitfolge (bit_0, ..., bit_(le-1)) zu beschreiben, wobei le die Länge der Eingabe der Selektionsfunktion nicht überschreitet, also le ≤ L(SEC_{TNi}^{TNj}) im Falle von SeqPosln und le ≤ KDF-Length im Falle von SeqPosOut. Dabei zeigt (für 0 ≤ j ≤ le-1) bit_j = 1 an, dass das Bit an Position bit_j der Eingabe der Selektionsfunktion zu deren Ausgabe gehört und bit_j = 0 zeigt an, dass das Bit an Position bit_j der Eingabe der Selektionsfunktion nicht zu deren Ausgabe gehört.

Die beschriebenen Varianten können auch miteinander kombiniert werden, indem bspw. aus einem mittels Variante 2.2 definierten zusammenhängenden Bereich von SEC_{TNi}^{TNj} einzelne Bits mittels Variante 1 oder Variante 3 selektiert werden, wobei im Falle der Variante 1 die selektierten Bits ggf. neugeordnet werden.

Jede der Varianten der Definition von Selektionsfunktionen hat ihre Vor- und Nachteile. Insb. kann es sinnvoll sein, für SeqPosln und für SeqPosOut unterschiedliche Definitionen zu nutzen.

Eine sehr günstige Ausgestaltung des Verfahrens kann es ferner vorsehen, dass die Ableitungsvorschrift DR ohne wenigstens eine der Eingangs- und/oder Ausgabe-Selektionsfunktionen SeqPosln, SeqPosOut übertragen wird, wobei anstelle der Übertragung wenigstens einer der Selektionsfunktionen SeqPosln, SeqPosOut eine Referenz auf eine gemeinsam bekannte Eingangs- und/oder Ausgabe-Selektionsfunktion SeqPosln, SeqPosOut übertragen wird.

Die Selektionsfunktionen SeqPosln, SeqPosOut müssen als Teil der Ableitungsvorschrift DR also nicht jedes Mal vollständig beschrieben werden, vielmehr kann eine Ableitungsvorschrift DR auch statt einer vollständigen Beschreibung eine Referenz auf eine beiden Teilnehmern TNᵢ, TNⱼ der Kommunikation bekannte Selektionsfunktion SeqPosln, SeqPosOut enthalten, indem bspw. ein eindeutiger Name der zu nutzenden Selektionsfunktion zusammen mit den Werten der ggf. von dieser benötigten Parameter angegeben wird.

Die Geheimnisse SEC_{TNi}^{TNj} können also derart genutzt werden, dass für jeden abzusehenden Zweck ein separater Bit-Block bzw. Bit-Bereich des Geheimnisses SEC_{TNi}^{TNj} genutzt wird, so dass, falls bei der Verwendung eines abgeleiteten Schlüssels Informationen über die zugrundeliegende Schlüsselbasis KDF-Key gewonnen werden könnten, nur dieser eine für diesen Zweck vorgesehene Bereich des Geheimnisses SEC_{TNi}^{TNj} korrumpiert wäre. Diese Einteilung von SEC_{TNi}^{TNj} in getrennte Bereiche kann besonders effizient mit Hilfe die oben in Variante 2.2 beschriebenen Selektionsfunktion, hier als Eingangs-Selektionsfunktion SeqPosln, umgesetzt werden.

Des Weiteren kann es sinnvoll sein, die Eingangs-Selektionsfunktionen SeqPosIn_j der das Geheimnis SEC_{TNi}^{TNj} nutzenden Ableitungsvorschriften DR_j stets so zu wählen, dass die einzelnen Bits eines teilnehmerindividuellen Geheimnisse SEC_{TNi}^{TNj} "gleichverteilt" durch diese Ableitungsvorschriften DR_j genutzt werden, in dem Sinne, dass zu jedem Zeitpunkt die einzelnen Bits des Geheimnisses SEC_{TNi}^{TNj} von nahezu gleich vielen bislang zur Schlüsselableitung genutzten Ableitungsvorschriften genutzt werden. Bezeichnet also #u die Anzahl der Ableitungsvorschriften bzw. Selektionsfunktionen, bei denen das Bit an Position u des Geheimnisses SEC_{TNi}^{TNj} zur Bildung des KDF-Key_j beiträgt, so gilt zu jedem Zeitpunkt, dass für zwei beliebige Bitpositionen u, k mit 0 ≤ u < k < L(SEC_{TNi}^{TNj}) |#u - #k| ≤ 1, wobei | . | den absoluten Abstand zweier Zahlen bezeichnet.

Des Weiteren kann es sinnvoll sein, die Eingangs-Selektionsfunktionen SeqPosIn_l der das Geheimnis SEC_{TNi}^{TNj} nutzenden Ableitungsvorschriften DR_I stets so zu wählen, dass die Schlüsselbasen KDF-Key_I der einzelnen Ableitungsvorschriften DR_I sich paarweise in etwa gleich vielen Positionen überschneiden. Sind also DR_1, ..., DR_n die einzelnen Ableitungsvorschriften und SeqPosln_1, ..., SeqPosln_n die dazugehörigen Input-Selektionsfunktionen und bezeichnet für zwei Selektionsfunktionen SeqPosIn_l, SeqPosln_k #∩(SeqPosIn_l, SeqPosln_k) die Anzahl der sowohl von SeqPosIn_l als auch von SeqPosln_k selektierten Bitpositionen, so soll nach Möglichkeit für beliebige l1, k1, l2, k2 mit l1 ≠ k1, l2 ≠ k2 stets $\left|#∩\left(SeqPosln_I1, SeqPosln_k1\right)-#∩\left(SeqPosln_I2, SeqPosln_k2\right)\right| \leq 1 gelten .$

Die beiden obigen Eigenschaften werden auf lange Sicht, also bei einem großen n, mit einer mit n wachsenden Wahrscheinlichkeit immer besser erreicht, wenn für die Auswahl der durch die Eingangs-Selektionsfunktionen SeqPosIn_l selektierten Bitpositionen ein Zufallszahlengenerator oder ein Pseudo-Zufallszahlengenerator genutzt wird, der für jede Ableitungsvorschrift DR_I zufällig die durch SeqPosln_I beschriebenen Bitpositionen festlegt.

Die Ausgabe-Selektionsfunktion SeqPosOut dient dazu, den Wert des abgeleiteten Schlüssels DR(SEC_{TNi}^{TNj}) explizit gestalten bzw. formen zu können. Dies ermöglicht es auch, durch eine geeignete Wahl der Ausgabelänge KDF-Length und der angepassten Ausgabe-Selektionsfunktion SeqPosOut jede beliebige vorab festgelegte Bitfolge bf* auf vertrauliche Weise als DR(SEC_{TNi}^{TNj}) an den Empfänger zu übertragen. Dafür werden aus einer ausreichend langen Bitfolge bf, welche das Ergebnis der Ableitungsvorschrift DR vor der Anwendung der Ausgabe-Selektionsfunktion SeqPosOut ist, genau diejenigen Bits ausgewählt, welche die festgelegte Bitfolge bf* ergeben. Daher kann eine Ableitungsvorschrift bei Bedarf auch als ein (den Platzbedarf in der Nachricht betreffend nicht besonders effizientes aber sicheres) Verschlüsselungsverfahren genutzt werden, ohne dass dabei ein konventionelles Verschlüsselungsverfahren eingesetzt wird. Dieses Verschlüsselungsverfahren ist von der altbekannten Buch-Verschlüsselung inspiriert, bei welcher Zeichenfolgen als Seiten- und Wort- und Zeichennummern eines vorab vereinbarten Buchs als "gemeinsames Geheimnis" codiert werden. Wie auch dort ist es möglich, trotz zweier verschiedener Geheimnisse bei verschiedenen Teilnehmern an diese dieselbe festgelegte Bitfolge bf* zu übertragen. Dies erfordert lediglich eine an das jeweilige Geheimnis bf* angepasste Längenangabe KDF-Length und eine an bf* angepasste Ausgabe-Selektionsfunktion.

Dieses Verschlüsselungsverfahren ist sicher gegen passives Mitlesen, weil KDF eine sichere Einwegfunktion ist. Durch die Einmaligkeit des Salt-Wertes wird bei jeder Anwendung von KDF bei einem ausreichend großen KDF-Length ein einmaliger Wert für KDF(SeqPosIn(SEC_{TNi}^{TNj}), KDF-Salt, KDF-Length) erzeugt, was dafür sorgt, dass sogar für gleiche zu übertragenden Geheimnisse DR(SEC_{TNi}^{TNj}) verschiedene Selektionsfunktionen SeqPosOut genutzt werden.

Bei der Definition einer Ableitungsvorschrift DR kann auf die Angabe einer Selektionsfunktion oder beider Selektionsfunktionen SeqPosln, SeqPosOut auch vollständig verzichtet werden. Wird auf die Angabe von SeqPosln verzichtet, so wird das gesamte geteilte Geheimnis SEC_{TNi}^{TNj} als Eingabe für die Schlüsselableitungsfunktion KDF genutzt. Wird auf die Angabe von SeqPosOut verzichtet, so werden alle KDF-Length Bits der Ausgabe der Schlüsselableitungsfunktion KDF als Ergebnis DR(SEC_{TNi}^{TNj}) genutzt.

Das beschriebene Verfahren kann dazu genutzt werden, zwei Teilnehmern TNᵢ und TNⱼ, die sich nicht kennen, also keinen geteilten Schlüssel besitzen, aber einen "gemeinsamen bekannten" Partner, bspw. den Teilnehmer TNₖ oder die TA, haben, mit dem sie jeweils mindestens einen gemeinsamen Schlüssel teilen, von TNₖ bzw. der TA einen beliebigen gemeinsamen Schlüssel zukommen zu lassen, wodurch TNᵢ und TNⱼ anschließend sicher miteinander kommunizieren können, ohne dass zu irgend einem Zeitpunkt konventionelle Verschlüsselungsverfahren genutzt werden.

Dies ermöglicht die Vorteile, dass
- das Verfahren eine sichere Übertragung beliebiger Informationen beliebiger Größe über einen bzgl. Vertraulichkeit unsicheren Kanal erlaubt; und dass
- das Verfahren ohne konventionelle Verschlüsselungsverfahren auskommt, es basiert ausschließlich auf einer sicheren Schlüsselableitungsfunktion KDF, die i.d.R. allein auf sicheren Einwegfunktionen (Hashfunktionen) basiert.

Alternativ zu einer vorab vorgenommenen Schlüsselaushandlung nach dem oben beschriebenen Verfahren kann gemäß einer vorteilhaften Weiterbildung des erfindungsgemäßen Verfahrens die Ableitungsvorschrift DR für den Schlüssel auch direkt mit der Nachricht, deren Teile mit dem neu ausgehandelten Schlüssel geschützt sind, mitgeschickt werden. Bevor die Nachricht gelesen bzw. ausgewertet wird, muss dieser Schlüssel dann von der Gegenseite erst nach der mitgeschickten Ableitungsvorschrift erzeugt werden. Hier muss darauf geachtet werden, dass die Ableitungsvorschrift für den Schlüssel, mit dem die Nachricht oder Teile davon ggf. verschlüsselt worden ist, nicht verschlüsselt übertragen werden darf.

Somit könnte ein beliebiger mit Hilfe einer Ableitungsvorschrift DR_ENCR abgeleiteter Schlüssel DR_ENCR(SEC_{TNi}^{TNj}) dazu genutzt werden, beliebige Daten dat gleicher Bitlänge durch Anwendung der XOR-Funktion ⊕ zu verschlüsseln. Eine durch DR_ENCR(SEC_{TNi}^{TNj}) verschlüsselte Daten dat enthaltende Nachricht könnte dann bspw. folgendermaßen aussehen:
(DR_ENCR, DR_ENCR (SEC_{TNi}^{TNj}) ⊕ dat)

Die Daten dat und die Ableitungsvorschrift DR_ENCR könnten hier also in einer Nachricht übertragen werden.

Da in einer Ableitungsvorschrift kein Geheimnis enthalten ist, ist keine Verschlüsselung der eine Ableitungsvorschrift enthaltenden Nachrichten notwendig, ein sicheres Verschlüsselungsverfahren ENCR muss somit, im Gegensatz zu dem in der oben genannten DE 10 2020 003 739 A1 beschriebenen Verfahren, nicht zwingend von jedem Teilnehmer TNᵢ implementiert werden.

Geht man davon aus, dass das Geheimnis eines Teilnehmers TNᵢ nur ihm und der Trust Authority TA bekannt ist, so ist strenggenommen auch keine Authentifizierung der eine Ableitungsvorschrift DR enthaltenden Nachrichten notwendig, denn, gelingt es einem Angreifer, an den Teilnehmer TNᵢ eine durch den Angreifer definierte Ableitungsvorschrift DR' zu übertragen, wird durch die Ableitung und anschließende Verwendung eines ggf. falschen Schlüssels dieser nicht offengelegt bzw. korrumpiert. Allerdings kann dadurch ggf. ein zwischen dem Teilnehmer TNᵢ und der TA zu einem bestimmten Zweck bereits abgestimmter Schlüssel durch einen vom Angreifer "neu ausgehandelten" falschen Schlüssel überschrieben werden. Geht man jedoch davon aus, dass der Angreifer nicht im Besitz des genutzten geteilten Geheimnisses SEC_{TNi}^{TNj} ist, sondern nur eine falsche Ableitungsvorschrift DR' übermittelt und dadurch die Ableitung und Nutzung eines neuen Schlüssels anstößt, so kann er anschließend mit diesem falschen Schlüssel gesicherte, bspw. verschlüsselte, Daten auch nicht lesen. Trotzdem wäre aus Gründen der Systemrobustheit eine Authentifizierung AUTH der eine Ableitungsvorschrift DR enthaltenden Nahrichten zur Schlüsselaushandlung wünschenswert.

Schützt der genutzte Kommunikationskanal nicht vor Manipulation der übertragenen Daten, so kann bspw. eine Ableitungsvorschrift DR_AUTH für einen zusätzlichen Authentifizierungsschlüssel DR_AUTH(SEC_{TNi}^{TNj}) ausreichender Länge erstellt und übertragen werden, wobei dieser Authentifizierungsschlüssel von TNᵢ dafür genutzt wird, den zweiten Teil der an TNⱼ übertragenen Nachricht, die Ableitungsvorschrift für DR(SEC_{TNi}^{TNj}), mit einem symmetrischen Verfahren AUTH, bspw. einem HMAC, zu authentifizieren, wobei AUTH mit Hilfe eines symmetrischen Schlüssels symKey den Authentifizierungsstempel AUTH(symKey, dat) eines Datums dat berechnet. Eine so gegen Manipulation geschützte Nachricht könnte dann bspw. folgendermaßen aussehen: (DR, DR_AUTH, AUTH(DR_AUTH(SEC_{TNi}^{TNj}), DR)) oder
(DR, DR_AUTH, AUTH(DR_AUTH(SEC_{TNi}^{TNj}), (DR, DR_AUTH)))

Sollen weitere Daten dat auch mit DR_AUTH(SEC_{TNi}^{TNj}) authentifiziert werden, so können diese bspw. folgendermaßen mitaufgenommen werden:
(DR, DR_AUTH, dat, AUTH(DR_AUTH(SEC_{TNi}^{TNj}), (DR, DR_AUTH, dat)))

Gemäß einer außerordentlich günstigen Ausgestaltung des Verfahrens gemäß der Erfindung kann dabei auch der abgeleitete Schlüssel DR(SEC_{TNi}^{TNj}) selbst dazu genutzt werden, die Ableitungsvorschrift DR bei der Übertragung mit einem symmetrischen Verfahren AUTH direkt zu authentifizieren. Eine so gegen Manipulation geschützte Nachricht könnte dann bspw. folgendermaßen aussehen:
(DR, AUTH(DR(SEC_{TNi}^{TNj}), DR))

Sollen weitere Daten dat mit DR(SEC_{TNi}^{TNj}) authentifiziert werden, so können diese hierbei bspw. folgendermaßen mitaufgenommen werden:
(DR, dat, AUTH(DR(SEC_{TNi}^{TNj}), (DR, dat)))

Um Replay-Attacken und andere Attacken zu verhindern, können weitere Daten zusätzlich zur Ableitungsvorschrift DR authentifiziert werden, bspw. die Identität des absendenden Partners, bspw. TNᵢ oder TA, und/oder ein Zeitstempel zum Nachweis der Aktualität der Ableitungsvorschrift DR. Es kann auch ein Challenge-Response-Verfahren eingesetzt werden, anhand dessen der Empfänger, bspw. TA oder TNᵢ, dann überprüfen kann, ob die erzeugten Schlüssel "frisch" sind.

## Patentansprüche

1. Verfahren zum sicheren Aushandeln von symmetrischen Schlüsseln zwischen wenigstens zwei Teilnehmern einer Kommunikation, wobei die Teilnehmer jeweils paarweise mit einem gemeinsamen Geheimnis ausgestattet sind oder mittelbar über einen weiteren Teilnehmer, welcher mit jedem der beiden anderen Teilnehmer jeweils ein gemeinsames Geheimnis teilt, damit ausstattbar sind, wobei die Teilnehmer jeweils paarweise mit wenigstens einer gemeinsamen Schlüsselableitungsfunktion ausgestattet sind oder mittelbar über den weiteren Teilnehmer damit ausstattbar sind, wobei
bei Bedarf an einem symmetrischen Schlüssel oder der Erneuerung eines symmetrischen Schlüssels dieser auf Basis des gemeinsamen Geheimnisses und einer der Schlüsselableitungsfunktionen gemäß einer Ableitungsvorschrift abgeleitet wird, welche zumindest die zu verwendende Schlüsselableitungsfunktion und wenigstens einen Parameter für die Schlüsselableitungsfunktion umfasst und dem einen der Teilnehmer von dem anderen der Teilnehmer mitgeteilt wird, und wobei die Ableitungsvorschrift die zu verwendende Schlüsselableitungsfunktion, die Ausgabelänge und jeweils eine Eingangs- und Ausgabe-Selektionsfunktion für die Definition eingehender und ausgehender Bits umfasst,
**dadurch gekennzeichnet, dass**
mittels verschiedener Eingangs-Selektionsfunktionen verschiedene Bereiche des gemeinsamen Geheimnisses genutzt werden.

2. Verfahren nach Anspruch 1,
**dadurch gekennzeichnet, dass**
die Schlüsselableitungsfunktion als Parameter eine Schlüsselbasis, einen Salt und eine Ausgabelänge nutzt, wobei die Schlüsselbasis ein beiden Teilnehmern bekanntes oder von einem beiden Teilnehmern bekannten Geheimnis ableitbares Geheimnis ist, wobei Salt eine zufällige oder pseudozufällige Bitfolge vorgegebener Länge ist, und wobei die Ausgabelänge eine natürliche Zahl ist, welche die Länge der Ausgabe der Schlüsselableitungsfunktion angibt.

3. Verfahren nach Anspruch 2,
**dadurch gekennzeichnet, dass**
die Ableitungsvorschrift die zu verwendende Schlüsselableitungsfunktion, den Salt, die Ausgabelänge und jeweils eine Eingangs- und Ausgabe-Selektionsfunktion für die Definition eingehender und ausgehender Bits umfasst.

4. Verfahren nach einem der Ansprüche 1 bis 3,
**dadurch gekennzeichnet, dass**
die Schlüsselbasis der Schlüsselableitungsfunktion mittels der Eingangs-Selektionsfunktion ermittelt wird, in dem die Eingangs-Selektionsfunktion bestimmte Bits des gemeinsamen Geheimnisses auswählt, diese ausgewählten Bits in der bestehenden Ordnung belässt oder ihre Reihenfolge verändert und das Ergebnis als Schlüsselbasis der Schlüsselableitungsfunktion verwendet wird.

5. Verfahren nach einem der Ansprüche 1 bis 4,
**dadurch gekennzeichnet, dass**
der Schlüssel durch die Ableitungsvorschrift auf der Basis der Ausgabe-Selektionsfunktion erstellt wird, indem die Ausgabe-Selektionsfunktion bestimmte Bits aus der Ausgabe der Schlüsselableitungsfunktion Ausgabelängeselektiert und diese in der selektierten oder einer neuen Reihenfolge anordnet.

6. Verfahren nach einem der Ansprüche 1 bis 5,
**dadurch gekennzeichnet, dass**
die Eingangs- und/oder Ausgabe-Selektionsfunktion als eine neuordnende Selektionsfunktion durch eine Abfolge von Bitpositionen beschrieben wird.

7. Verfahren nach einem der Ansprüche 1 bis 6,
**dadurch gekennzeichnet, dass**
die Eingangs- und/oder Ausgabe-Selektionsfunktion als eine ordnungswahrende Selektionsfunktion durch eine Abfolge von Bitabständen und/oder Bitabständen und zugehörigen Bitanzahlen beschrieben wird.

8. Verfahren nach einem der Ansprüche 1 bis 7,
**dadurch gekennzeichnet, dass**
die Eingangs- und/oder Ausgabe-Selektionsfunktion als eine ordnungswahrende Selektionsfunktion durch eine Bitfolge beschrieben wird, wobei die Bits das Einbeziehen oder das Nicht- Einbeziehenden der korrespondierenden Bits in die Ausgabe der Selektionsfunktion anzeigen.

9. Verfahren nach einem der Ansprüche 1 bis 8,
**dadurch gekennzeichnet, dass**
die Ableitungsvorschrift ohne wenigstens eine der Eingangs- und/oder Ausgabe-Selektionsfunktionen übertragen wird, wobei anstelle der Übertragung wenigstens einer der Selektionsfunktionen eine Referenz auf eine gemeinsam bekannte Eingangs- und/oder Ausgabe-Selektionsfunktion übertragen wird.

10. Verfahren nach einem der Ansprüche 1 bis 9,
**dadurch gekennzeichnet, dass**
für mehrere Ableitungsvorschriften die dazugehörigen Eingangs-Selektionsfunktionen so gewählt werden, dass die Selektion der einzelnen Bitpositionen des Geheimnisses durch die Eingangsselektionsfunktion in etwa gleichverteilt ist, oder dass die für zwei beliebige verschiedene Eingangs-Selektionsfunktionen die Anzahl der von beiden Eingangs-Selektionsfunktionen selektierten Bitpositionen des Geheimnisses in etwa gleichverteilt ist.

11. Verfahren nach Anspruch einem der Ansprüche 1 bis 10,
**dadurch gekennzeichnet, dass**
die durch die jeweilige Eingangs-Selektionsunktion selektierten Bitpositionen des Geheimnisses durch einen Zufallszahlengenerator oder durch einen Pseudo-Zufallszahlengenerator festgelegt werden, wobei die Bitpositionen aus dem ganzen Geheimnis oder aus einem vorgegebenen Bereich des Geheimnisses ausgewählt werden.

12. Verfahren nach einem der Ansprüche 1 bis 11,
**dadurch gekennzeichnet, dass**
übertragene Daten durch den durch die mitübertragene Ableitungsvorschrift definierten Schlüssel symmetrisch authentifiziert werden.

13. Verfahren nach einem der Ansprüche 1 bis 12,
**dadurch gekennzeichnet, dass**
die Ableitungsvorschrift als unverschlüsselter Teil einer mit dem durch die mitübertragene Ableitungsvorschrift definierten Schlüssel verschlüsselten Nachricht übertragen wird.

14. Verfahren nach Anspruch 12 und 13,
**dadurch gekennzeichnet, dass**
die mitübertragene Ableitungsvorschrift Teil der durch den durch die mitübertragene Ableitungsvorschrift definierten Schlüssel authentifizierten Daten ist.

15. Verfahren nach einem der Ansprüche 1 bis 12,
**dadurch gekennzeichnet, dass**
als einer der Teilnehmer oder als der weitere Teilnehmer eine zentrale Vertrauensinstanz eingesetzt wird.

## Claims

1. Method for securely negotiating symmetric keys between at least two participants in communication, each of the participants being equipped pairwise with a shared secret or it being possible for each of the participants to be equipped with it indirectly by means of another participant which shares a shared secret with each of the two other participants, each of the participants being equipped pairwise with at least one shared key derivation function or it being possible for each of the participants to be equipped with it indirectly by means of the other participant, wherein,
if a symmetric key is required or a symmetric key is renewed, it is derived on the basis of the shared secret and one of the key derivation functions according to a derivation rule which comprises at least the key derivation function to be used and at least one parameter for the key derivation function and is communicated to one of the participants by the other participant, and the derivation rule comprising the key derivation function to be used, the output length and an input and output selection function for defining incoming and outgoing bits, respectively,
**characterized in that**
different regions of the shared secret are used by means of different input selection functions.

2. Method according to claim 1,
**characterized in that**
the key derivation function uses a key base, a salt, and an output length as parameters, the key base being a secret known to both participants or derivable from a secret known to both participants, the salt being a random or pseudo-random bit sequence of a predetermined length, and the output length being a natural number which specifies the length of the output of the key derivation function.

3. Method according to claim 2,
**characterized in that**
the derivation rule comprises the key derivation function to be used, the salt, the output length, and an input and output selection function for defining incoming and outgoing bits, respectively.

4. Method according to any of claims 1 to 3,
**characterized in that**
the key base of the key derivation function is determined by means of the input selection function, in which the input selection function selects certain bits of the shared secret, leaves these selected bits in the existing order or changes their order, and the result is used as the key base of the key derivation function.

5. Method according to any of claims 1 to 4,
**characterized in that**
the key is created by means of the derivation rule on the basis of the output selection function **in that** the output selection function output length selects certain bits from the output of the key derivation function and arranges them in the selected order or a new order.

6. Method according to any of claims 1 to 5,
**characterized in that**
the input and/or output selection function is described as a reordering selection function by means of a sequence of bit positions.

7. Method according to any of claims 1 to 6,
**characterized in that**
the input and/or output selection function is described as an order-preserving selection function by means of a sequence of bit spacings and/or bit spacings and associated bit rates.

8. Method according to any of claims 1 to 7,
**characterized in that**
the input and/or output selection is described as an order-preserving selection function by means of a bit sequence, the bits displaying the inclusion or the non-includers of the corresponding bits in the output of the selection function.

9. Method according to any of claims 1 to 8,
**characterized in that**
the derivation rule is transmitted without at least one of the input and/or output selection functions, with a reference to a jointly known input and/or output selection function being transmitted instead of transmitting at least one of the selection functions.

10. Method according to any of claims 1 to 9,
**characterized in that**
for multiple derivation rules, the corresponding input selection functions are chosen such that the selection of the individual bit positions of the secret by the input selection function is approximately uniformly distributed, or **in that** the for any two different input selection functions, the number of the bit positions of the secret selected by the two input selection functions is approximately uniformly distributed.

11. Method according to any of claims 1 to 10,
**characterized in that**
the bit positions of the secret selected by the relevant input selection function are stipulated by a random number generator or by a pseudo-random number generator, the bit positions being selected from the entire secret or from a predetermined region of the secret.

12. Method according to any of claims 1 to 11,
**characterized in that**
transmitted data are symmetrically authenticated by the key defined by the transmitted derivation rule.

13. Method according to any of claims 1 to 12,
**characterized in that**
the derivation rule is transmitted as an unencrypted part of a message encrypted using the key defined by the transmitted derivation rule.

14. Method according to claim 12 and 13,
**characterized in that**
the transmitted derivation rule is part of the data authenticated by the key defined by the transmitted derivation rule.

15. Method according to any of claims 1 to 12,
**characterized in that**
a central trust authority is deployed as one of the participants or as the other participant.

## Revendications

1. Procédé permettant de négocier en toute sécurité des clés symétriques entre au moins deux participants à une communication, dans lequel les participants possèdent respectivement, par paires, un secret commun, ou peuvent le posséder indirectement par l'intermédiaire d'un participant supplémentaire qui partage un secret commun avec chacun des deux autres participants, dans lequel les participants possèdent respectivement, par paires, au moins une fonction commune de dérivation de clé, ou peuvent la posséder indirectement par l'intermédiaire du participant supplémentaire, dans lequel
en cas de besoin d'une clé symétrique ou de renouvellement d'une clé symétrique, celle-ci est dérivée à partir du secret partagé et de l'une des fonctions de dérivation de clé, conformément à une règle de dérivation qui comprend au moins la fonction de dérivation de clé à utiliser et au moins un paramètre pour la fonction de dérivation de clé, et qui est communiquée à l'un des participants par l'autre participant, et dans lequel la règle de dérivation comprend la fonction de dérivation de clé à utiliser, la longueur de sortie ainsi qu'une fonction de sélection d'entrée et une fonction de sélection de sortie respectives pour la définition des bits entrants et sortants,
**caractérisé en ce**
**qu'**à l'aide de différentes fonctions de sélection d'entrées, différentes parties du secret partagé peuvent être utilisées.

2. Procédé selon la revendication 1,
**caractérisé en ce que**
la fonction de dérivation de clé utilise comme paramètres une base de clé, un salage et une longueur de sortie, dans lequel la base de clé est un secret connu des deux participants ou pouvant être dérivé d'un secret connu de l'un des deux participants, dans lequel le salage est une séquence de bits aléatoire ou pseudo-aléatoire d'une longueur prédéfinie, et dans lequel la longueur de sortie est un nombre entier naturel qui indique la longueur de sortie de la fonction de dérivation de clé.

3. Procédé selon la revendication 2,
**caractérisé en ce que**
la règle de dérivation comprend la fonction de dérivation de clé à utiliser, le salage, la longueur de sortie, ainsi qu'une fonction de sélection d'entrée et une fonction de sélection de sortie pour la définition de bits entrants et sortants.

4. Procédé selon l'une des revendications 1 à 3,
**caractérisé en ce que**
la base de clé de la fonction de dérivation de clé est déterminée à l'aide de la fonction de sélection d'entrée du fait que la fonction de sélection d'entrée sélectionne certains bits du secret partagé, laisse ces bits sélectionnés dans leur ordre d'origine ou modifie leur ordre, et le résultat est utilisé comme base de clé de la fonction de dérivation de clé.

5. Procédé selon l'une des revendications 1 à 4,
**caractérisé en ce que**
la clé est générée par la règle de dérivation sur la base de la fonction de sélection de sortie du fait que la fonction de sélection de sortie sélectionne certains bits à partir de la sortie de la fonction de dérivation de clé en fonction de la longueur de sortie et les réorganise dans l'ordre sélectionné ou dans un nouvel ordre.

6. Procédé selon l'une des revendications 1 à 5,
**caractérisé en ce que**
la fonction de sélection d'entrée et/ou de sortie est décrite comme une fonction de sélection de réorganisation par une séquence de positions binaires.

7. Procédé selon l'une des revendications 1 à 6,
**caractérisé en ce que**
la fonction de sélection d'entrée et/ou de sortie est décrite comme une fonction de sélection préservant l'ordre par une séquence d'intervalles binaires et/ou d'intervalles binaires et de nombres de bits associés.

8. Procédé selon l'une des revendications 1 à 7,
**caractérisé en ce que**
la fonction de sélection d'entrée et/ou de sortie est décrite comme une fonction de sélection préservant l'ordre par une séquence de bits, dans lequel les bits indiquent l'inclusion ou la non-inclusion des bits correspondants dans la sortie de la fonction de sélection.

9. Procédé selon l'une des revendications 1 à 8,
**caractérisé en ce que**
la règle de dérivation est transmise sans au moins l'une des fonctions de sélection d'entrée et/ou de sortie, dans lequel une référence à une fonction de sélection d'entrée et/ou de sortie connue en commun est transmise à la place de la transmission d'au moins l'une des fonctions de sélection.

10. Procédé selon l'une des revendications 1 à 9,
**caractérisé en ce que**
pour plusieurs règles de dérivation, les fonctions de sélection d'entrée correspondantes sont choisies de telle sorte que la sélection des différentes positions binaires du secret par la fonction de sélection d'entrée soit répartie de manière à peu près uniforme, ou que, pour deux fonctions de sélection d'entrée différentes quelconques, le nombre de positions binaires du secret sélectionnées par les deux fonctions de sélection d'entrée soit à peu près uniformément réparti.

11. Procédé selon l'une des revendications 1 à 10,
**caractérisé en ce que**
les positions binaires du secret, lesquelles sont sélectionnées par la fonction de sélection d'entrée correspondante, sont déterminées par un générateur de nombres aléatoires ou par un générateur de nombres pseudoaléatoires, dans lequel les positions binaires sont choisies dans l'intégralité du secret ou dans une plage prédéfinie du secret.

12. Procédé selon l'une des revendications 1 à 11,
**caractérisé en ce que**
les données transmises sont authentifiées de manière symétrique à l'aide de la clé définie par la règle de dérivation transmise en même temps.

13. Procédé selon l'une des revendications 1 à 12,
**caractérisé en ce que**
la règle de dérivation est transmise sous forme de partie non chiffrée d'un message chiffré à l'aide de la clé définie par la règle de dérivation transmise en même temps.

14. Procédé selon les revendications 12 et 13,
**caractérisé en ce que**
la règle de dérivation transmise fait partie des données authentifiées par la clé définie par la règle de dérivation transmise en même temps.

15. Procédé selon l'une des revendications 1 à 12,
**caractérisé en ce**
**qu'**une instance de confiance centrale est désignée comme l'un des participants ou comme le participant supplémentaire.
